# EUROPÄISCHE PATENTSCHRIFT

(11) **EP 4 251 499 B1**
(45) Veröffentlichungstag und Bekanntmachung des Hinweises auf die Patenterteilung: **12.03.2025**
(21) Anmeldenummer: 21794322.4
(22) Anmeldetag: 12.10.2021
(51) Int. Cl.: B62J 1/12, B62J 1/10

(54) **SITZVORRICHTUNG FÜR EIN NEIGEFAHRZEUG**
SEATING DEVICE FOR A TILTING VEHICLE
DISPOSITIF DE SIÈGE POUR UN VÉHICULE INCLINABLE

(30) Priorität: 27.11.2020 DE 102020131458
(43) Veröffentlichungstag der Anmeldung: 04.10.2023
(73) Patentinhaber: Bayerische Motoren Werke Aktiengesellschaft, 80809 München (DE)
(72) Erfinder: KOETZINGER, Georg, 83346 Bergen (DE)
(86) Internationale Anmeldenummer: PCT/EP2021/078088
(87) Internationale Veröffentlichungsnummer: WO 2022/111900

(56) Entgegenhaltungen:
- DE-A1- 102018 132 229
- GB-A- 2 450 512
- IT-A1- CN20 110 009

## Beschreibung

Die Erfindung betrifft eine Sitzvorrichtung für ein, insbesondere einen Boxermotor umfassendes, Neigefahrzeug, mit mindestens einer Sitzbank, mit mindestens einem Haltemittel, durch das die Sitzbank auf einer der Fahrtrichtung zugewandten Seite an einer Fahrzeugkomponente des Neigefahrzeugs oder einem Fahrzeugrahmen anordenbar oder angeordnet und durch das ein Bewegen der Sitzbank parallel zur Hochachse und zur Querachse begrenzbar ist, und mit mindestens einer Koppeleinrichtung, die an einer der Fahrtrichtung abgewandten Seite der Sitzbank festlegbar oder festgelegt ist, durch die die Sitzbank mittelbar oder unmittelbar an dem Fahrzeugrahmen begrenzt bewegbar festlegbar oder festgelegt ist, die mindestens ein mittelbar oder unmittelbar an der Sitzbank festgelegtes erstes Koppelmittel, die mindestes ein am Fahrzeugrahmen festgelegtes zweites Koppelmittel und die mindestens ein zwischen erstem Koppelmittel und zweitem Koppelmittel angeordnetes erstes Bewegungsfreiraummittel umfasst, durch das die Sitzbank, mittels Relativbewegung des ersten Koppelmittels zum zweiten Koppelmittel, relativ zum Fahrzeugrahmen, zumindest in oder schräg zur Querachse des Neigefahrzeugs, begrenzt bewegbar ist.

Bei Neigefahrzeugen werden die Sitzvorrichtungen zumindest auf einer der Fahrtrichtung abgewandten Seite an einer Fahrzeugkomponente oder an einem Fahrzeugrahmen festgelegt. Hierdurch sind die Sitzvorrichtung und der Fahrzeugrahmen, insbesondere die mit dem Fahrzeugrahmen verbundene Sitzbank und der Fahrzeugrahmen, bezüglich ihrer Kinematik miteinander gekoppelt.

Wenn das Neigefahrzeug einen Boxermotor umfasst, kann der Zylinder des Boxermotors bezüglich eines Mittellagers in Längsrichtung versetzt angeordnet sein. Durch diesen Versatz erfährt das Neigefahrzeug einen Drehimpuls um die Hochachse des Neigefahrzeugs. Hierdurch können Schwingungen enstehen, die auf die Sitzvorrichtung übertragen werden können und die seitens eines Benutzers des Neigefahrzeugs als unangenehm empfunden werden können.

Eine gattungsgemäße Sitzvorrichtung ist bekannt aus IT CN20 110 009 A1 und DE 10 2018 132229 A1.

Eine nicht gattungsgemäße Sitzvorrichtung ist bekannt aus GB 2 450 512 A, die gegen eine horizontale seitliche Bewegung festgelegt ist.

Eine Aufgabe eines Ausführungsbeispiels der Erfindung ist, die in einer Sitzvorrichtung auftretenden Schwingungen beim Betrieb eines Neigefahrzeugs zu reduzieren.

Diese Aufgabe wird bei einer eingangs genannten Sitzvorrichtung dadurch gelöst, dass die Koppeleinrichtung mindestens ein stab- oder streifenförmiges biegesteifes Abstandsmittel umfasst, mit dem die Sitzbank mittelbar oder unmittelbar am Fahrzeugrahmen festlegbar ist, das zwischen der Sitzbank und dem Fahrzeugrahmen angeordnet ist und an dessen einem Ende das erste Koppelmittel oder das zweite Koppelmittel angeordnet ist.

Dadurch, dass die Sitzvorrichtung eine Koppeleinrichtung umfasst, bei der die Sitzbank mittelbar oder unmittelbar über ein erstes Koppelmittel und ein zweites Koppelmittel sowie ein zwischen erstem Koppelmittel und zweitem Koppelmittel angeordnetes Bewegungsfreiraummittel mittelbar oder unmittelbar an dem Fahrzeugrahmen begrenzt bewegbar festlegbar ist, können von dem Fahrzeugrahmen auf die Sitzbank übertragene Schwingungen ausgeglichen oder abgedämpft werden. Hierdurch ist das Fahrgefühl für einen Benutzer des Neigefahrzeugs verbessert.

Die Koppeleinrichtung kann auf einer dem Fahrzeugrahmen zugewandten Unterseite der Sitzbank angeordnet sein.

Unter einem Neigefahrzeug werden Fahrräder, Motorräder oder motorrad-ähnliche Kraftfahrzeuge, wie Motorroller, insbesondere zwei-, drei- oder vierrädrige Motorroller, Scooter, neigbare Trikes, Quads oder Dergleichen verstanden.

Durch das stab- oder streifenförmige biegesteife Abstandsmittel kann die Sitzbank zum Fahrzeugrahmen beabstandet am Fahrzeugrahmen festgelegt werden. Solchenfalls kann das erste Koppelmittel oder das zweite Koppelmittel am stab- oder streifenförmigen biegesteifen Abstandsmittel angeordnet sein.

Bei einer Weiterbildung letztgenannter Ausführungsform erweist es sich als vorteilhaft, wenn das Abstandsmittel von dem der Fahrtrichtung abgewandten Ende der Sitzbank in oder entgegen der Fahrtrichtung erstreckt ist.

Wenn das Neigefahrzeug einen Boxermotor umfasst, bei dem Schwingungen aufgrund eines Drehimpulses um die Hochachse entstehen, kann es sich als vorteilhaft erweisen, wenn die Koppeleinrichtung in Richtung Neigefahrzeugmitte verlagert ist. Solchenfalls sind die seitens des Fahrzeugrahmens in Richtung auf die Sitzbank übertragbaren Schwingungen aufgrund der vorherrschenden geringeren Fliehkräfte reduziert.

Um das Abstandsmittel festzulegen, erweist es sich als vorteilhaft, wenn die Koppeleinrichtung mindestens ein Festlegemittel umfasst, durch das das Abstandsmittel auf einer dem ersten Bewegungsfreiraummittel gegenüberliegenden Seite das Abstandsmittel an der Sitzbank oder an dem Fahrzeugrahmen festlegbar oder festgelegt ist.

Solchenfalls kann das Abstandsmittel durch das mindestens eine Festlegemittel entweder an der Sitzbank oder an dem Fahrzeugrahmen festgelegt werden. Entsprechend sind das erste Koppelmittel, das zweite Koppelmittel und das Bewegungsfreiraummittel an dem dem mindestens einen Festlegemittel gegenüberliegenden Ende des Abstandsmittels angeordnet und hierdurch am Fahrzeugrahmen bzw. an der Sitzbank, festgelegt.

Um ein Abfedern oder Dämpfen von seitens des Fahrzeugrahmens auf die Sitzbank übertragenen Schwingungen weiter zu verbessern, ist bei einer Weiterbildung letztgenannter Ausführungsform vorgesehen, dass die Koppeleinrichtung mindestens ein zweites Bewegungsfreiraummittel umfasst, das zwischen dem Festlegemittel und einer Aufnahme der Sitzbank bzw. einer Aufnahme des Fahrzeugrahmens, anordenbar oder angeordnet ist und durch das die Sitzbank, mittels Relativbewegung des Festlegemittels zur Aufnahme, relativ zum Fahrzeugrahmen, zumindest in oder schräg zur Querachse des Neigefahrzeugs, begrenzt bewegbar ist.

Um eine Bewegungsmöglichkeit der Sitzbank bezüglich des Fahrzeugrahmens weiter einzuschränken, erweist es sich als vorteilhaft, wenn die Koppeleinrichtung mindestens zwei voneinander beabstandete Festlegemittel, durch die das Abstandsmittel an der Sitzbank oder an dem Fahrzeugrahmen festlegbar oder festgelegt ist, und mindestens zwei zweite Bewegungsfreiraummittel umfasst, wobei jeweils ein zweites Bewegungsfreiraummittel einem Festlegemittel zugeordnet ist.

Durch das Vorsehen von mindestens zwei voneinander beabstandeten Festlegemitteln wird einer Bewegung der Sitzbank um das mindestens eine Festlegemittel mit einem Radius der Länge des Abstandsmittels vorgebeugt.

Das erste Bewegungsfreiraummittel und/oder das zweite Bewegungsfreiraummittel können grundsätzlich beliebig ausgebildet sein, sofern sie der technischen Funktion nachkommen, eine begrenzte Relativbewegung des ersten Koppelmittels zum zweiten Koppelmittels, bzw. des Festlegemittels zu ermöglichen. Das erste Bewegungsfreiraummittel und/oder das zweite Bewegungsfreiraummittel lassen sich technisch einfach realisieren, wenn das erste Bewegungsfreiraummittel und/oder das zweite Bewegungsfreiraummittel ein Dämpfmittel, insbesondere eine elastische Tülle, eine elastisch verformbare oder formstabile Buchse und/oder einen Stufenbolzen umfasst.

Um ein Übertragen von Vibrationen von dem Fahrzeugrahmen oder einer Fahrzeugkomponente in Richtung auf die Sitzbank der Sitzvorrichtung weiter zu reduzieren, umfasst ein Ausführungsbeispiel der Sitzvorrichtung eine Dämpfeinrichtung, die mindestens ein Dämpfelement umfasst, das an der Sitzbank und/oder am Fahrzeugrahmen oder einer Fahrzeugkomponente anordenbar oder angeordnet ist, das mit seinem freien Ende berührend an dem Fahrzeugrahmen oder an der Fahrzeugkomponente bzw. an der Sitzbank anlegbar ist, und durch das eine entlang der Hochachse wirkende Kraft abdämpfbar ist.

Durch das mindestens eine Dämpfelement sind Vibrationen und/oder Schwingungen, die in Richtung der Hochachse wirken, dämpfbar. Darüber hinaus kann die Sitzbank oder der Fahrzeugrahmen, bzw. die Fahrzeugkomponente, relativ zu mindestens einem Dämpfelement bewegt werden. Das Dämpfelement liegt an dem Fahrzeugrahmen oder der Fahrzeugkomponente berührend an, wenn es an der Sitzbank festgelegt ist, wodurch ein gleitendes Bewegen des Fahrzeugrahmens oder der Fahrzeugkomponente relativ zum Dämpfelement ermöglicht ist. Umgekehrt ist die Sitzbank relativ zum Dämpfelement bewegbar, wenn das Dämpfelement am Fahrzeugrahmen oder einer Fahrzeugkomponente festgelegt ist.

Um die Dämpfwirkung weiter zu verbessern, ist bei einer Weiterbildung letztgenannter Ausführungsform vorgesehen, dass das mindestens eine Dämpfelement der Dämpfeinrichtung, mindestens zwei lamellenartig in Richtung der Hochachse erstreckte und zueinander durch einen Spalt beabstandete Abschnitte umfasst.

Hierdurch können geringe Schwingungen durch das mindestens eine Dämpfelement aufgenommen werden, ohne dass die Sitzbank, bzw. der Fahrzeugrahmen oder die Fahrzeugkomponente eine Relativbewegung bezüglich des Dämpfelements durchführen. Ferner ist solchenfalls die Lebensdauer des Dämpfelements verbessert.

Weiter ist bei einer Ausführungsform der Sitzvorrichtung vorgesehen, dass das Haltemittel, durch das die Sitzbank auf einer der Fahrtrichtung zugewandten Seite an einer Fahrzeugkomponente des Kraftfahrzeugs oder einem Fahrzeugrahmen anordenbar oder angeordnet ist, haken- oder ösenartig ausgebildet ist, in das die Sitzbank mit einer korrespondierend, insbesondere komplementär, ausgebildeten Öse oder einem Haken eingreifend anordenbar ist.

Solchenfalls ist die Sitzbank auf einfache Weise auf dem Haltemittel anordenbar und lediglich für ein Entnehmen entgegen der Fahrtrichtung freigegeben. Hiergegen ist die Sitzbank festgelegt, wenn die Sitzbank über die Koppeleinrichtung an dem Fahrzeugrahmen festgelegt ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Sitzvorrichtung.

In der Zeichnung zeigt:
- Figur 1: Eine aufgeklappte Draufsicht auf die Unterseite einer Sitzbank einer Sitzvorrichtung und einer Oberseite eines Fahrzeugrahmens eines Neigefahrzeugs;
- Figur 2: Eine perspektivische Seitenansicht auf ein erstes Ausführungsbeispiel eines Abstandsmittels der Koppeleinrichtung der Sitzvorrichtung;
- Figur 3: Eine perspektivische Seitenansicht auf ein zweites Ausführungsbeispiel eines Abstandsmittels der Koppeleinrichtung der Sitzvorrichtung.

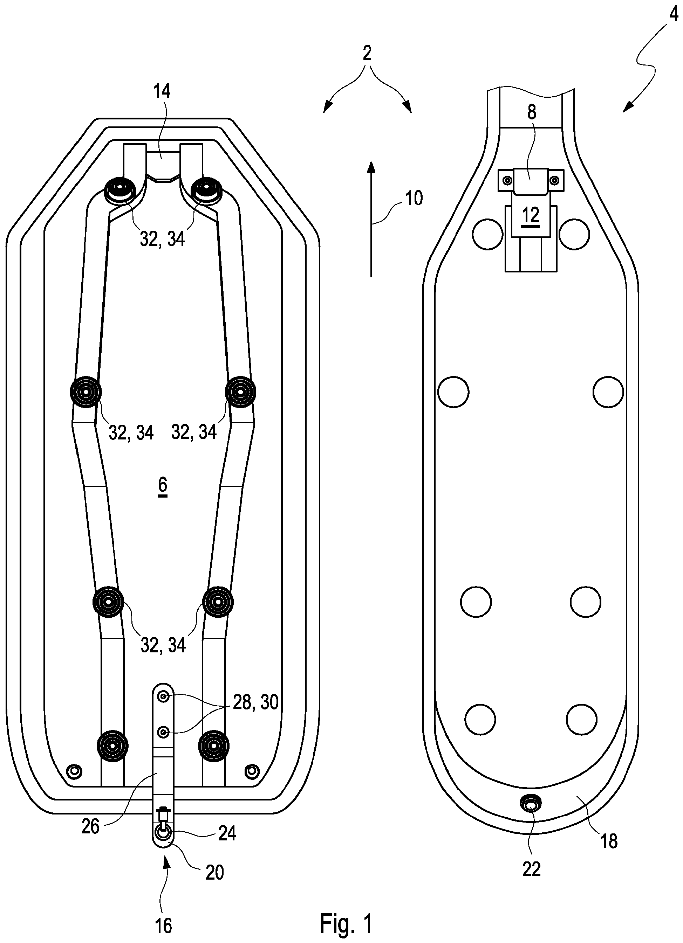

Figur 1 zeigt eine insgesamt mit dem Bezugszeichen 2 versehene Sitzvorrichtung für mindestens ein einen Boxermotor (in den Figuren nicht explizit dargestellt) umfassendes Neigefahrzeug 4 (in den Figuren nur teilweise dargestellt). Die Sitzvorrichtung 2 umfasst eine Sitzbank 6, die in Figur 1 in einer Draufsicht auf die dem Neigefahrzeug zugewandten Seite dargestellt ist. Die Sitzvorrichtung 2 umfasst ein Haltemittel 8, durch das die Sitzbank 6 auf einer der in Fahrtrichtung 10 zugewandten Seite an einer Fahrzeugkomponente 12 des Neigefahrzeugs 4 festgelegt ist. Bei dem in Figur 1 gezeigten Ausführungsbeispiel ist das Haltemittel 8 ösenartig ausgebildet, in die die Sitzbank 6 mit einem korrespondierend, insbesondere komplementär, ausgebildeten Haken 14 eingreifend anordenbar ist.

Darüber hinaus umfasst die Sitzvorrichtung 2 eine Koppeleinrichtung 16, die an einer der Fahrtrichtung 10 abgewandten Seite der Sitzbank 6 festlegbar oder festgelegt ist. Durch die Koppeleinrichtung 16 ist die Sitzbank 6 an einem Fahrzeugrahmen 18 festlegbar. Hierzu umfasst die Koppeleinrichtung 16 ein mittelbar an der Sitzbank 6 festgelegtes erstes Koppelmittel 20 sowie ein am Fahrzeugrahmen 18 festgelegtes zweites Koppelmittel 22. Um eine begrenzte Relativbewegung des ersten Koppelmittels 20 zum zweiten Koppelmittel 22 zu gewährleisten, umfasst die Koppeleinrichtung 16 ein erstes Bewegungsfreiraummittel 24, durch das die Sitzbank 6, mittels Relativbewegung des ersten Koppelmittels 20 zum zweiten Koppelmittel 22, relativ zum Fahrzeugrahmen 18, zumindest in oder schräg zur Querachse des Neigefahrzeugs 4 begrenzt bewegbar ist.

Bei dem in den Figuren gezeigten Ausführungsbeispiel umfasst die Koppeleinrichtung 16 ein stab- oder streifenfömiges, biegesteifes Abstandsmittel 26, mit dem die Sitzbank 6 mit dem Fahrzeugrahmen 18 koppelbar ist. Bei dem in den Figuren gezeigten Ausführungsbeispielen umfasst das Abstandsmittel 26 auf seiner der Fahrtrichtung 10 abgewandten Seite das erste Koppelmittel 20 sowie das Bewegungsfreiraummittel 24.

Darüber hinaus ist den Figuren ersichtlich, dass das Abstandsmittel 26 durch zwei Festlegemittel 28 an der Sitzbank 6 festgelegt ist. An den Festlegemitteln 28 ist jeweils ein zweites Bewegungsfreiraummittel 30 angeordnet, das zwischen dem Festlegemittel 28 und einer Aufnahme der Sitzbank 6 angeordnet ist und durch das die Sitzbank 6, mittels Relativbewegung des Festlegemittels 28 zur Aufnahme, relativ zum Fahrzeugrahmen 18, zumindest in oder schräg zur Querachse des Neigefahrzeugs 4 begrenzt bewegbar ist.

Darüber hinaus umfasst die Sitzvorrichtung 2 eine Dämpfeinrichtung 32, die bei dem in den Figuren gezeigten Ausführungsbeispielen mehrere Dämpfelemente 34 umfasst. Diese sind bei dem in den Figuren 1 bis 3 dargestellten Ausführungsbeispielen auf der dem Fahrzeugrahmen 18 zugewandten Seite der Sitzbank 6 festgelegt. Bei einer Anordnung der Sitzbank 6 liegen die Dämpfelement 34 der Dämpfeinrichtung 32 an dem Fahrzeugrahmen 18, bzw. an der Fahrzeugkomponente 12 an.

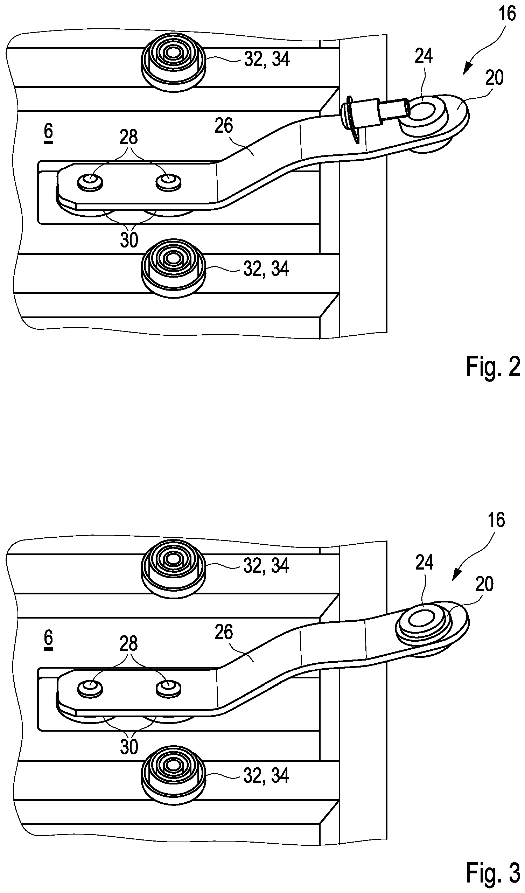

Figur 2 zeigt ein erstes Ausführungsbeispiel der Sitzvorrichtung 2, bei der die Koppeleinrichtung 16 ein erstes Bewegungsfreiraummittel 24 umfasst, das durch eine elastische Tülle gebildet ist. Durch das Verwenden einer Gummitülle als erstes Bewegungsfreiraummittel 24 ist eine Bewegung des ersten Koppelmittels 20 bezüglich des zweiten Koppelmittels 22 gewährleistet und gleichzeitig aufgrund der elastischen Verformbarkeit der Gummitülle eine Dämpfung von Schwingungen ermöglicht.

Figur 3 zeigt ein zweites Ausführungsbeispiel der Sitzvorrichtung 2, bei der das erste Bewegungsfreiraummittel 24 der Koppeleinrichtung 16 durch eine Buchse gebildet ist. In dieser ist ein Festlegeelement, wie Schraube oder Bolzen, führbar und die Buchse an sich zwischen dem ersten Koppelmittel 20 und dem zweiten Koppelmittel 22 begrenzt bewegbar.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein, wobei der Schutzbereich jedoch nur durch die Ansprüche definiert ist.

### Bezugszeichenliste

- 2: Sitzvorrichtung
- 4: Neigefahrzeug
- 6: Sitzbank
- 8: Haltemittel
- 10: Fahrtrichtung
- 12: Fahrzeugkomponente
- 14: Haken
- 16: Koppeleinrichtung
- 18: Fahrzeugrahmen
- 20: erstes Koppelmittel
- 22: zweites Koppelmittel
- 24: erstes Bewegungsfreiraummittel
- 26: Abstandsmittel
- 28: Festlegemittel
- 30: zweites Bewegungsfreiraummittel
- 32: Dämpfeinrichtung
- 34: Dämpfelement

## Patentansprüche

1. Sitzvorrichtung (2) für ein Neigefahrzeug (4), insbesondere ein einen Boxermotor umfassendes Neigefahrzeug (4), mit mindestens einer Sitzbank (6), mit mindestens einem Haltemittel (8), durch das die Sitzbank (6) auf einer der Fahrtrichtung (10) zugewandten Seite an einer Fahrzeugkomponente (12) des Neigefahrzeugs (4) oder einem Fahrzeugrahmen (18) anordenbar oder angeordnet und durch das ein Bewegen der Sitzbank (6) parallel zur Hochachse und zur Querachse begrenzbar ist, und mit mindestens einer Koppeleinrichtung (16), die an einer der Fahrtrichtung (10) abgewandten Seite der Sitzbank (6) festlegbar oder festgelegt ist, durch die die Sitzbank (6) mittelbar oder unmittelbar an dem Fahrzeugrahmen (18) begrenzt bewegbar festlegbar oder festgelegt ist, die mindestens ein mittelbar oder unmittelbar an der Sitzbank (6) festgelegtes erstes Koppelmittel (20), die mindestes ein am Fahrzeugrahmen (18) festgelegtes zweites Koppelmittel (22) und die mindestens ein zwischen erstem Koppelmittel (20) und zweitem Koppelmittel (22) angeordnetes erstes Bewegungsfreiraummittel (24) umfasst, durch das die Sitzbank (6), mittels Relativbewegung des ersten Koppelmittels (20) zum zweiten Koppelmittel (22), relativ zum Fahrzeugrahmen (18), zumindest in oder schräg zur Querachse des Neigefahrzeugs (4), begrenzt bewegbar ist, **dadurch gekennzeichnet,**
**dass** die Koppeleinrichtung (16) mindestens ein stab- oder streifenförmiges biegesteifes Abstandsmittel (26) umfasst, mit dem die Sitzbank (6) mittelbar oder unmittelbar am Fahrzeugrahmen (18) festlegbar ist, das zwischen der Sitzbank (6) und dem Fahrzeugrahmen (18) angeordnet ist und an dessen einem Ende das erste Koppelmittel (20) oder das zweite Koppelmittel (22) angeordnet ist.

2. Sitzvorrichtung (2) nach Anspruch 1, **dadurch gekennzeichnet, dass** das Abstandsmittel (26) von dem der Fahrtrichtung (10) abgewandten Ende der Sitzbank (6) in oder entgegen der Fahrtrichtung (10) erstreckt ist.

3. Sitzvorrichtung (2) nach Anspruch 1 oder 2, **dadurch gekennzeichnet, dass** die Koppeleinrichtung (16) mindestens ein Festlegemittel (28) umfasst, durch das das Abstandsmittel (26) auf einer dem ersten Bewegungsfreiraummittel (24) gegenüberliegenden Seite das Abstandsmittel (26) an der Sitzbank (6) oder an dem Fahrzeugrahmen (18) festlegbar oder festgelegt ist.

4. Sitzvorrichtung (2) nach Anspruch 3, **dadurch gekennzeichnet, dass** die Koppeleinrichtung (16) mindestens ein zweites Bewegungsfreiraummittel (30) umfasst, das zwischen dem Festlegemittel (28) und einer Aufnahme der Sitzbank (6) bzw. einer Aufnahme des Fahrzeugrahmens (18), anordenbar oder angeordnet ist und durch das die Sitzbank (6), mittels Relativbewegung des Festlegemittels (28) zur Aufnahme, relativ zum Fahrzeugrahmen (18), zumindest in oder schräg zur Querachse des Neigefahrzeugs (4), begrenzt bewegbar ist.

5. Sitzvorrichtung (2) nach Anspruch 3 oder 4, **dadurch gekennzeichnet, dass** die Koppeleinrichtung (16) mindestens zwei voneinander beabstandete Festlegemittel (28), durch die das Abstandsmittel (26) an der Sitzbank oder an dem Fahrzeugrahmen (18) festlegbar oder festgelegt ist, und mindestens zwei zweite Bewegungsfreiraummittel (30) umfasst, wobei jeweils ein zweites Bewegungsfreiraummittel (30) einem Festlegemittel (28) zugeordnet ist.

6. Sitzvorrichtung (2) nach einem der vorhergehenden Ansprüche, **dadurch gekennzeichnet, dass** das erste Bewegungsfreiraummittel (24) und/oder das zweite Bewegungsfreiraummittel (30) ein Dämpfmittel, insbesondere eine elastische Tülle, eine elastisch verformbare oder formstabile Buchse und/oder einen Stufenbolzen umfasst.

7. Sitzvorrichtung (2) nach einem der vorhergehenden Ansprüche, **gekennzeichnet durch** eine Dämpfeinrichtung (32), die mindestens ein Dämpfelement (34) umfasst, das an der Sitzbank (6) und/oder am Fahrzeugrahmen (18) oder einer Fahrzeugkomponente (12) anordenbar oder angeordnet ist, das mit seinem freien Ende berührend an dem Fahrzeugrahmen (18) oder an der Fahrzeugkomponente (12) bzw. an der Sitzbank (6) anlegbar ist, und durch das eine entlang der Hochachse wirkende Kraft abdämpfbar ist.

8. Sitzvorrichtung (2) nach Anspruch 7, **dadurch gekennzeichnet, dass** das mindestens eine Dämpfelement (34) der Dämpfeinrichtung (32) mindestens zwei lamellenartig in Richtung der Hochachse erstreckte und zueinander durch einen Spalt beabstandete Abschnitte umfasst.

9. Sitzvorrichtung (2) nach einem der vorhergehenden Ansprüche, **dadurch gekennzeichnet, dass** das Haltemittel (8), durch das die Sitzbank (6) auf einer der Fahrtrichtung (10) zugewandten Seite an einer Fahrzeugkomponente (12) des Kraftfahrzeugs oder einem Fahrzeugrahmen (18) anordenbar oder angeordnet ist, haken- oder ösenartig ausgebildet ist und in das die Sitzbank (6) mit einer korrespondierend, insbesondere komplementär, ausgebildeten Öse oder einem Haken (14) eingreifend anordenbar ist.

## Claims

1. Seat device (2) for a tilting vehicle (4), in particular a tilting vehicle (4) comprising a boxer engine, having at least one seat bench (6), having at least one holding means (8), by means of which the seat bench (6) can be arranged or is arranged on a vehicle component (12) of the tilting vehicle (4) or on a vehicle frame (18) on a side facing the direction of travel (10), and by means of which movement of the seat bench (6) parallel to the vertical axis and to the transverse axis can be limited, and having at least one coupling unit (16), which can be fixed or is fixed on a side of the seat bench (6) facing away from the direction of travel (10), by means of which coupling unit the seat bench (6) can be fixed or is fixed indirectly or directly to the vehicle frame (18) so as to be movable to a limited extent, and which comprises at least one first coupling means (20) fixed indirectly or directly to the seat bench (6), at least one second coupling means (22) fixed to the vehicle frame (18), and at least one first movement clearance means (24) which is arranged between the first coupling means (20) and second coupling means (22) and by means of which the seat bench (6) is movable to a limited extent relative to the vehicle frame (18), at least in or transversely to the transverse axis of the tilting vehicle (4), by means of movement of the first coupling means (20) relative to the second coupling means (22), **characterized in that** the coupling unit (16) comprises at least one rod- or strip-shaped, flexurally rigid spacer means (26) which can be used to fix the seat bench (6) indirectly or directly to the vehicle frame (18), and which is arranged between the seat bench (6) and the vehicle frame (18) and at the one end of which the first coupling means (20) or the second coupling means (22) is arranged.

2. Seat device (2) according to Claim 1, **characterized in that** the spacer means (26) extends in or counter to the direction of travel (10) from the end of the seat bench (6) facing away from the direction of travel (10).

3. Seat device (2) according to Claim 1 or 2, **characterized in that** the coupling unit (16) comprises at least one fixing means (28), by means of which the spacer means (26) can be fixed or is fixed to the seat bench (6) or to the vehicle frame (18) on a side of the spacer means (26) opposite the first movement clearance means (24).

4. Seat device (2) according to Claim 3, **characterized in that** the coupling unit (16) comprises at least one second movement clearance means (30) which can be arranged or is arranged between the fixing means (28) and a mounting of the seat bench (6) or a mounting of the vehicle frame (18), and by means of which the seat bench (6) is movable to a limited extent relative to the vehicle frame (18), at least in or transversely to the transverse axis of the tilting vehicle (4), by means of movement of the fixing means (28) relative to the mounting.

5. Seat device (2) according to Claim 3 or 4, **characterized in that** the coupling unit (16) comprises at least two spaced-apart fixing means (28), by means of which the spacer means (26) can be fixed or is fixed to the seat bench or to the vehicle frame (18), and at least two second movement clearance means (30), one second movement clearance means (30) being assigned to one fixing means (28) each.

6. Seat device (2) according to one of the preceding claims, **characterized in that** the first movement clearance means (24) and/or the second movement clearance means (30) comprises/comprise a damping means, in particular an elastic grommet, an elastically deformable or dimensionally stable bushing and/or a step pin.

7. Seat device (2) according to one of the preceding claims, **characterized by** a damping unit (32) which comprises at least one damping element (34) which can be arranged or is arranged on the seat bench (6) and/or on the vehicle frame (18) or a vehicle component (12), can be positioned with its free end touching the vehicle frame (18) or the vehicle component (12) and/or the seat bench (6), and by means of which a force acting along the vertical axis can be damped.

8. Seat device (2) according to Claim 7, **characterized in that** the at least one damping element (34) of the damping unit (32) comprises at least two portions which extend in lamellar form in the direction of the vertical axis and are spaced apart from one another by a gap.

9. Seat device (2) according to one of the preceding claims, **characterized in that** the holding means (8), by means of which the seat bench (6) can be arranged or is arranged on a vehicle component (12) of the motor vehicle or on a vehicle frame (18) on a side facing the direction of travel (10), is designed in the manner of a hook or eyelet, and in which the seat bench (6) can be arranged so as to engage therein with an eyelet or a hook (14) formed in a corresponding, in particular complementary, manner.

## Revendications

1. Dispositif de siège (2) pour un véhicule inclinable (4), en particulier un véhicule inclinable (4) comprenant un moteur à plat, comprenant au moins une banquette (6), au moins un moyen de maintien (8) par lequel la banquette (6) peut être ou est disposée sur un côté tourné vers le sens de la marche (10) au niveau d'un composant de véhicule (12) du véhicule inclinable (4) ou d'un châssis de véhicule (18), et par lequel un mouvement de la banquette (6) en parallèle à l'axe vertical et à l'axe transversal peut être limité, et comprenant au moins un dispositif de couplage (16) qui peut être ou est fixé sur un côté, détourné du sens de la marche (10), de la banquette (6), par lequel la banquette (6) peut être ou est fixée directement ou indirectement au châssis de véhicule (18) avec une mobilité limitée, qui comprend au moins un premier moyen de couplage (20) fixé directement ou indirectement à la banquette (6), qui comprend au moins un deuxième moyen de couplage (22) fixé au châssis de véhicule (18), et qui comprend au moins un premier moyen de dégagement (24), disposé entre le premier moyen de couplage (20) et le deuxième moyen de couplage (22), par lequel la banquette (6) peut être déplacée de manière limitée au moyen d'un mouvement relatif du premier moyen de couplage (20) vers le deuxième moyen de couplage (22), par rapport au châssis de véhicule (18), au moins dans ou en biais par rapport à l'axe transversal du véhicule inclinable (4), **caractérisé en ce que** le dispositif de couplage (16) comprend au moins un moyen d'écartement (26) résistant à la flexion, en forme de tige ou de ruban, par lequel la banquette (6) peut être fixée directement ou indirectement au châssis de véhicule (18) qui est disposé entre la banquette (6) et le châssis de véhicule (18) et à une extrémité duquel est disposé le premier moyen de couplage (20) ou le deuxième moyen de couplage (22).

2. Dispositif de siège (2) selon la revendication 1, **caractérisé en ce que** le moyen d'écartement (26) s'étend de l'extrémité, détournée du sens de la marche (10), de la banquette (6) dans ou à l'opposé du sens de la marche (10).

3. Dispositif de siège (2) selon la revendication 1 ou 2, **caractérisé en ce que** le dispositif de couplage (16) comprend au moins un moyen de fixation (28) par lequel le moyen d'écartement (26) peut être ou est fixé au niveau de la banquette (6) ou du châssis de véhicule (18) sur un côté du moyen d'écartement (26) opposé au premier moyen de dégagement (24).

4. Dispositif de siège (2) selon la revendication 3, **caractérisé en ce que** le dispositif de couplage (16) comprend au moins un deuxième moyen de dégagement (30) qui peut être ou est disposé entre le moyen de fixation (28) et un logement de la banquette (6) ou un logement du châssis de véhicule (18) et par lequel la banquette (6) peut être déplacée de manière limitée au moyen d'un mouvement relatif du moyen de fixation (28) vers le logement, par rapport au châssis de véhicule (18) au moins dans ou en biais de l'axe transversal du véhicule inclinable (4).

5. Dispositif de siège (2) selon la revendication 3 ou 4, **caractérisé en ce que** le dispositif de couplage (16) comprend au moins deux moyens de fixation (28) espacés l'un de l'autre, par lesquels le moyen d'écartement (26) peut être ou est fixé à la banquette ou au châssis de véhicule (18), et comprend au moins deux deuxièmes moyens de dégagement (30), dans lequel respectivement un deuxième moyen de liberté de mouvement (30) est associé à un moyen de fixation (28).

6. Dispositif de siège (2) selon l'une quelconque des revendications précédentes, **caractérisé en ce que** le premier moyen de liberté de mouvement (24) et/ou le deuxième moyen de liberté de mouvement (30) comprend un moyen d'amortissement, en particulier un embout élastique, une douille à déformation élastique ou indéformable et/ou un goujon étagé.

7. Dispositif de siège (2) selon l'une quelconque des revendications précédentes, **caractérisé par** un dispositif d'amortissement (32) qui comprend au moins un élément amortisseur (34) qui peut être ou est disposé au niveau de la banquette (6) et/ou du châssis de véhicule (18) ou d'un composant de véhicule (12), qui peut être appliqué par son extrémité libre en contact contre le châssis de véhicule (18) ou le composant de véhicule (12) ou la banquette (6), et par lequel une force agissant le long de l'axe vertical peut être amortie.

8. Dispositif de siège (2) selon la revendication 7, **caractérisé en ce que** ledit au moins un élément amortisseur (34) du dispositif d'amortissement (32) comprend au moins deux parties espacées l'une de l'autre par un interstice et s'étendant à la manière de lamelles en direction de l'axe vertical.

9. Dispositif de siège (2) selon l'une quelconque des revendications précédentes, **caractérisé en ce que** le moyen de maintien (8), par lequel la banquette (6) peut être ou est disposée sur un côté tourné vers le sens de la marche (10) au niveau d'un composant de véhicule (12) du véhicule automobile ou d'un châssis de véhicule (18), est réalisé à la manière d'un crochet ou d'un œillet et dans lequel la banquette (6) peut être disposée en mettant en prise un œillet ou un crochet (14) réalisé de manière correspondante, en particulier complémentaire.
